# EUROPÄISCHE PATENTANMELDUNG

(11) **EP 0 901 751 A1**
(43) Veröffentlichungstag der Anmeldung: **17.03.1999**
(21) Anmeldenummer: 98116795.0
(22) Anmeldetag: 05.09.1998
(51) Int. Cl.: A01K 5/02

(54) **Fütterungsvorrichtung für Tiere, insbesondere Schweine**

(30) Priorität: 09.09.1997 DE 19739346
(71) Anmelder: Drüke, Johannes, 33178 Borchen-Alfen (DE)
(72) Erfinder: Drüke, Johannes, 33178 Borchen-Alfen (DE)
(74) Vertreter: Schulze Horn & Partner

(57) **Zusammenfassung**

Die Erfindung betrifft eine Fütterungsvorrichtung (1) für Tiere, insbesondere Schweine, mit einem Vorratsbehälter (10) für fließ- oder schüttfähiges Futter, mit einer Ausgabe- und Dosiereinrichtung (2) und mit einem Futtertrog (3), wobei der Vorratsbehälter (10) zumindest in seinem unteren Teil (10'') trichterförmig mit einer durch einen ersten Ventilkörper (21) verschließbaren und freigebbaren Futterauslaßöffnung (11) ausgeführt ist, wobei von der Futterauslaßöffnung (11) ein Dosierrohr (20) nach unten läuft, dessen unteres Ende durch einen zweiten, von einem zu fütternden Tier verstellbaren Ventilkörper (22) verschließbar und freigebbar ist, und wobei die beiden Ventilkörper (21, 22) derart miteinander gekoppelt sind, daß bei einer Schließbewegung des zweiten Ventilkörpers (22) der erste Ventilkörper (21) eine Öffnungsbewegung ausführt und bei einer Schließbewegung des ersten Ventilkörpers (21) der zweite Ventilkörper (22) eine Öffnungsbewegung ausführt.

Die neue Fütterungsvorrichtung ist dadurch gekennzeichnet, daß die Kopplung zwischen den beiden Ventilkörpern (21, 22) derart ausgeführt ist, daß bei der Schließbewegung des zweiten Ventilkörpers (22) der erste Ventilkörper (21) seine Öffnungsbewegung erst beginnt, nachdem der zweite Ventilkörper (22) seine Schließstellung erreicht hat und daß bei der Schließbewegung des ersten Ventilkörpers (21) der zweite Ventilkörper (22) seine Öffnungsbewegung erst beginnt, nachdem der erste Ventilkörper (21) seine Schließstellung erreicht hat.

## Beschreibung

Die vorliegende Erfindung betrifft eine Fütterungsvorrichtung für Tiere, insbesondere Schweine, mit einem Vorratsbehälter für Futter, insbesondere fließfähiges Flüssigbreifutter oder schüttfähiges Trockenfutter, mit einer Ausgabe- und Dosiereinrichtung und mit einem Futtertrog, wobei der Vorratsbehälter zumindest in seinem unteren Teil trichterförmig mit einer durch einen ersten Ventilkörper verschließbaren und freigebbaren Futterauslaßöffnung ausgeführt ist, wobei von der Futterauslaßöffnung ein Dosierrohr nach unten läuft, dessen unteres Ende durch einen zweiten, von einem zu fütternden Tier verstellbaren Ventilkörper verschließbar und freigebbar ist, und wobei die beiden Ventilkörper derart miteinander gekoppelt sind, daß bei einer Schließbewegung des zweiten Ventilkörpers der erste Ventilkörper eine Öffnungsbewegung ausführt und bei einer Schließbewegung des ersten Ventilkörpers der zweite Ventilkörper eine Öffnungsbewegung ausführt.

Eine Fütterungsvorrichtung der genannten Art ist aus der EP 0 469 192 A1 bekannt. Bei dieser bekannten Fütterungsvorrichtung sind die beiden Ventilkörper durch eine starre stange fest miteinander verbunden. Die Länge der Stange zwischen den beiden Ventilkörpern ist dabei so groß gewählt, daß diese Einheit aus den zwei Ventilkörpern und der Stange innerhalb des Dosierrohres nach oben und unten ein Bewegungsspiel hat. In der Grundstellung sitzt der obere Ventilkörper auf dem oberen Ende des Dosierrohres und verschließt dieses futterdicht. Aus dieser Schließstellung kann der obere Ventilkörper durch ein zu fütterndes Tier in seine Öffnungsstellung bewegt werden, indem das Tier mit seiner Schnauze von unten her den unteren Ventilkörper nach oben bewegt. Hierdurch gelangt der untere Ventilkörper in seine Schließstellung am unteren Ende des Dosierrohres, wonach dann das Futter aus dem Vorratsbehälter in das Dosierrohr einströmt oder einrieselt, bis dieses gefüllt ist. Läßt danach das zu fütternde Tier den unteren Ventilkörper wieder frei, fällt die Einheit aus den beiden Ventilkörpern und der zugehörigen Verbindungsstange wieder nach unten. Hierdurch wird die untere Öffnung des Dosierrohres freigegeben und gleichzeitig dessen oberes Ende wieder verschlossen. Die in dem Dosierrohr angesammelte Menge des Futters fällt nun nach unten in den Futtertrog und kann von dem zu fütternden Tier aufgefressen werden.

Für eine zuverlässige Funktion dieser bekannten Vorrichtung ist es erforderlich, daß das zu fütternde Tier bei seiner Betätigung des unteren Ventilkörpers diesen immer so weit anhebt, daß er zuverlässig in seine Schließstellung gelangt. Nach Beobachtungen in der Praxis ist dies aber nicht immer der Fall; vielmehr lernen die Tiere, insbesondere Schweine, relativ schnell, daß sie zu einer größeren Futtermenge gelangen können, wenn sie den unteren Ventilkörper nur geringfügig anheben. Auf diese Weise wird ein freier Durchgang vom Vorratsbehälter bis in den Futtertrog geschaffen, so daß Futter in praktisch beliebiger Menge von den zu fütternden Tieren abgerufen werden kann. Zu große Futtermengen im Futtertrog sind aber aus hygienischen Gründen unerwünscht, da Futteranteile, die nicht sofort gefressen werden, relativ schnell verderben oder verschmutzen, was gesundheitliche Risiken für die Tiere zur Folge hat.

Aus der DE 27 50 163 A1 ist eine weitere Fütterungsvorrichtung der genannten Art bekannt. Auch bei dieser zweiten bekannten Fütterungsvorrichtung besteht eine starre Kopplung zwischen dem oberen und dem unteren Ventilkörper. Das Einlaufen einer unbegrenzten Futtermenge in den Futtertrog wird hier aber dadurch vermieden, daß der Vorratsbehälter oberhalb des Dosierrohres nur ein sehr geringes Volumen hat, das dem einer für eine einmalige Futterausgabe gewünschten Volumen entspricht. Der Vorratsbehälter ist bei dieser Fütterungsvorrichtung unmittelbar an eine Futterzuführleitung angeschlossen, mit der er über eine relativ kleine Durchbrechung in Verbindung steht. Durch die Futterzuführleitung wird stetig frisches Futter gefördert, wobei durch die Verbindungsöffnung Futter in den Vorratsbehälter fällt, bis dieser gefüllt ist.

Als nachteilig wird bei dieser bekannten Fütterungsvorrichtung insbesondere angesehen, daR es aufgrund der nur sehr kleinen Verbindungsöffnung zwischen der Futterzuführleitung und dem Vorratsbehälter und wegen der sehr großen Länge des Dosierrohres leicht zu Funktionsstörungen, insbesondere Verstopfungen, kommen kann. Hierdurch ist eine zuverlässige selbsttätige Fütterung der zu fütternden Tiere nicht mehr gewährleistet. Zur Sicherstellung eines ordnungsgemäßen Betriebes sind einerseits sehr lange Laufzeiten der Futterzuführung durch die Futterzuführleitung und andererseits ständige Funktionskontrollen und eine bedarfsweise Beseitigung von Verstopfungen durch das Bedienungspersonal erforderlich. Dies führt zu einem in der Praxis unwirtschaftlichen Betrieb.

Für die vorliegende Erfindung stellt sich deshalb die Aufgabe, eine Fütterungsvorrichtung der eingangs genannten Art zu schaffen, die bei einem einfachen mechanischen Aufbau einen zuverlässigen Betrieb gewährleistet und eine optimale Fütterung der Tiere erlaubt.

Die Lösung der gestellten Aufgabe gelingt mit einer Fütterungsvorrichtung der eingangs genannten Art, die dadurch gekennzeichnet ist, daß die Kopplung zwischen den beiden Ventilkörpern derart ausgeführt ist, daß bei der Schließbewegung des zweiten Ventilkörpers der erste Ventilkörper seine Öffnungsbewegung erst beginnt, nachdem der Zweite Ventilkörper seine Schließstellung erreicht hat und daß bei der Schließbewegung des ersten Ventilkörpers der zweite Ventilkörper seine Öffnungsbewegung erst beginnt, nachdem der erste Ventilkörper seine Schließstellung erreicht hat.

Die erfindungsgemäße Fütterungsvorrichtung bietet den Vorteil, daß stets immer nur eine Futtermenge ausgeworfen wird, deren Volumen dem Volumen des Dosierrohres entspricht. Eine Umgehung dieser Futtermengenbegrenzung durch eine Änderung der Betätigungsweise des zweiten Ventilkörpers durch die zu fütternden Tiere ist hier unmöglich. Dies beruht darauf, daß bei einer Betätigung des zweiten, unteren Ventilkörpers durch das zu fütternde Tier zunächst dieser Ventilkörper in seine Schließstellung gelangt, bevor dann der erste, obere Ventilkörper in seine Öffnungsstellung bewegt wird. Das Dosierrohr kann damit immer entweder nur oben oder nur unten geöffnet sein, so daß ein Durchströmen oder Durchrieseln von Futter aus dem Vorratsbehälter unmittelbar bis in den Futtertrog nicht möglich ist. Eine Überfüllung des Futtertroges und ein dadurch verursachtes Zurückbleiben von nicht aufgefressenen Futterresten wird so sicher vermieden. Die jeweilige Futtermenge, die bei einem Futterabruf ausgegeben wird, kann durch das Volumen des Dosierrohres vorgegeben werden. Dadurch ist auf einfache Weise eine Anpassung an unterschiedliche Tierarten oder -größen möglich.

Eine konkrete Ausgestaltung der Fütterungsvorrichtung gemäß Erfindung sieht vor, daß das Dosierrohr aus mindestens zwei teleskopisch gegeneinander begrenzt ein- und ausschiebbaren Rohrabschnitten gebildet ist, die durch eine vorgegebene oder vorgebbare Kraft in Ausschubrichtung vorbelastet sind, und daß zwischen den beiden Ventilkörpern ein nur mit einem der Ventilkörper verbundenes, durch das Dosierrohr verlaufendes Betätigungselement vorgesehen ist, dessen wirksame Länge maximal der Länge des Dosierrohres bei ausgeschobenen Rohrabschnitten entspricht. Diese konkrete Konstruktion stellt eine mögliche Realisierung des zuvor beschriebenen Funktionsprinzips der erfindungsgemäßen Fütterungsvorrichtung dar. Bei dieser Vorrichtung wird bei Betätigung durch ein zu fütterndes Tier der zweite Ventilkörper zunächst in dichtende Anlage an das untere Ende des unteren Rohrabschnittes des Dosierrohres gebracht. Bei der daran anschließenden weiteren Bewegung des zweiten Ventilkörpers nach oben wird nun auch der untere Rohrabschnitt mit nach oben bewegt, wobei während dieser zweiten Phase der Bewegung nun auch der obere Ventilkörper in seine Öffnungsstellung überführt wird. Das Dosierrohr wird dann bei geöffnetem oberen Ventilkörper durch Schwerkraftwirkung mit Futter gefüllt. Nach Loslassen des zweiten, unteren Ventilkörpers durch das Tier wird der untere Rohrabschnitt zusammen mit dem zweiten Ventilkörper durch die Vorbelastungskraft nach unten geschoben; den restlichen Weg nach unten legt der zweite Ventilkörper durch die Schwerkraft zurück, womit gleichzeitig das untere Ende des Dosierrohres geöffnet wird. Schon während der ersten Phase dieser Bewegung nach unten, d.h. während der Abwärtsbewegung des unteren Rohrabschnittes, wird auch schon der erste, obere Ventilkörper wieder in seine Schließstellung gebracht, bevor die Öffnung des unteren Endes des Dosierrohres beginnt.

In weiterer Ausgestaltung der zuletzt beschriebenen Fütterungsvorrichtung ist vorgesehen, daß der zweite Ventilkörper und das Betätigungselement starr miteinander verbunden und auf einer Vertikalführung gelagert sind. Hierdurch wird eine einfache und zuverlässige Betriebsweise der Fütterungsvorrichtung gefördert.

Weiter wird vorgeschlagen, daß die Vertikalführung durch eine im Futtertrog fixierte Stange mit einem höhenverstellbaren Anschlag gebildet ist und daß das Betätigungselement rohrförmig ausgebildet und zusammen mit dem zweiten Ventilkörper auf den oberen Teil der Stange aufgesetzt ist.

Um stets eine zuverlässige Abdichtung des oberen Endes des Dosierrohres bei Schließstellung des ersten Ventilkörpers zu gewährleisten, ist bevorzugt vorgesehen, daß dieser eine Kugel ist, deren spezifisches Gewicht größer ist als das des Futters. Hiermit wird insbesondere bei der Verfütterung von Flüssigbreifutter eine einfache und doch sichere Funktion erreicht.

Da der zweite Ventilkörper im Betrieb der Fütterungsvorrichtung von dem zu fütternden Tier mit der Schnauze betätigt werden soll, ist bevorzugt vorgesehen, daß der zweite Ventilkörper eine nach oben gewölbte Platte ist. Eine solche Platte kann von dem zu fütternden Tier besonders einfach von unten nach oben angehoben werden, so daß hier nur eine kurze Gewöhnungs- und Lernphase bei den zu fütternden Tieren zu erwarten ist. Die Wölbung sorgt für einen dichten Verschluß des unteren Endes des Dosierrohres bei angehobenen zweiten Ventilkörper. Alternativ kann der zweite Ventilkörper auch die Form einer flachen Platte haben.

Als weiterer Beitrag zu einer möglichst einfachen mechanischen Konstruktion der Fütterungsvorrichtung ist zweckmäßig der obere Rohrabschnitt fest mit dem Futterbehälter verbunden, wobei der untere Rohrabschnitt den oberen Rohrabschnitt außen umgibt und zwischen dem unteren Rohrabschnitt und dem Futterbehälter eine einstellbare Druckfederanordnung vorgesehen ist. Im einfachsten Fall kann die einstellbare Druckfederanordnung durch eine einzelne Schrauben-Druckfeder gebildet sein, die außen um das Dosierrohr herum angeordnet ist und die beispielsweise durch einen verstellbaren Anschlagring hinsichtlich ihrer Vorspannung verstellbar ist.

Um die Bedienung der Fütterungsvorrichtung für das Bedienungspersonal zu vereinfachen und insbesondere eine bequeme Verstellung der Vorbelastungskraft der Druckfederanordnung zu ermöglichen, ist bevorzugt vorgesehen, daß von dem unteren Rohrabschnitt eine Druckstange parallel zum Vorratsbehälter bis nahe an dessen oberes Ende geführt ist, daß am oberen Ende der Druckstange die Druckfederanordnung angebracht ist und daß an der Druckstange ein von der Druckfederanordnung beaufschlagter verschieb- und fixierbarer Anschlag vorgesehen ist.

Für die Gesunderhaltung eines Tierbestandes ist es wesentlich, daß den Tieren stets frisches Futter angeboten wird. Um ein insbesondere bei Flüssigbreifutter relativ rasch eintretendes Verderben von Futter innerhalb des Vorratsbehälters der Fütterungsvorrichtung sicher auszuschließen, ist vorgesehen, daß der Vorratsbehälter in seinem oberen, größten Teil mit einer gleichbleibenden Querschnittsfläche ausgeführt ist und daß in diesem Teil des Vorratsbehälters ein Reinigungsschieber mit einer umlaufenden, nach unten weisenden Dichtung angeordnet ist. Für die Reinigung der inneren Oberfläche des Vorratsbehälters genügt es, den Reinigungsschieber von oben nach unten zu bewegen, wobei dessen nach unten weisende Dichtung gegebenenfalls an der inneren Oberfläche des Vorratsbehälters anhaftendes Futter nach unten schiebt und so zum trichterförmigen unteren Teil des Vorratsbehälters befördert, von wo aus die Futterausgabe erfolgt. Die Bewegung des Reinigungsschiebers nach unten kann im einfachsten Fall manuell oder durch Schwerkraft erfolgen; bedarfsweise ist auch eine Betätigung durch einen geeigneten Kraftantrieb denkbar. Um einen Auslaß der gegebenenfalls unterhalb des Reinigungsschiebers befindlichen Luft zu ermöglichen, ist dieser zweckmäßig mit einem Entlüftungsventil versehen, das zwar einen Durchgang von Luft erlaubt, aber beim Auftreffen von Futter schließt. Auf diese Weise kann das Zurückführen des Reinigungsschiebers in seine angehobene Stellung einfach dadurch erfolgen, daß von unten her frisches Futter, insbesondere flüssiger Futterbrei, in den Vorratsbehälter gepumpt wird.

Zur Vermeidung eines Verkantens und Verklemmens des Reinigungsschiebers weist dieser mindestens eine von seiner Oberseite nach oben verlaufende Führungsstange auf, die durch eine Führungsbuchse in einer oben auf dem Vorratsbehälter angeordneten Traverse geführt ist.

Vorteilhaft besitzt die Fütterungsvorrichtung eine Futterzuführleitung, die von einer zentralen Futterzubereitungs- oder Futtervorhaltungs-Vorrichtung kommend in den unteren Teil des Vorratsbehälters einmündet. Auf diese Weise können mehrere Fütterungsvorrichtungen der genannten Art in einem größeren Betrieb mit einer zentralen Futterzubereitungs- oder Futtervorhaltungs-Vorrichtung verbunden werden, was für das Bedienungspersonal eine wesentliche Arbeitserleichterung darstellt. Durch die Einmündung der Futterzuführleitung in den unteren Teil des Vorratsbehälters wird bei Flüssigbreifutter insbesondere erreicht, daß bei Zuführung von frischem Futter die im unteren Teil des Vorratsbehälters gegebenenfalls durch Entmischung abgesetzten Futter-Feststoffe aufgewirbelt und intensiv mit dem frisch zugeführten Futter vermischt werden. Dauerhafte Entmischungen von flüssigen und festen Futterbestandteilen werden so unterbunden. Gleichzeitig wird so auch das oben schon beschriebene Bewegen des Reinigungsschiebers nach oben allein durch die Zuführung von frischem Futter gewährleistet. Bei Verfütterung von Trockenfutter treten die vorstehend beschriebenen Probleme nicht auf und es genügt in diesem Fall, frisches Trockenfutter einfach von oben in den Vorratsbehälter zu schütten.

Eine zu der Ausführung der Fütterungsvorrichtung nach Anspruch 2 alternative Ausführung sieht vor, daß unter dem zweiten Ventilkörper im Abstand und verschiebbar zu diesem eine Betätigungsplatte angeordnet ist, daß zwischen dem zweiten Ventilkörper und der Betätigungsplatte eine Druckfederanordnung vorgesehen ist und daß zwischen den beiden Ventilkörpern ein nur mit einem der Ventilkörper verbundenes, durch das Dosierrohr verlaufendes Betätigungselement vorgesehen ist, dessen wirksame Länge maximal der Länge des Dosierrohres entspricht. Auch mit einer Fütterungsvorrichtung dieser Ausführung wird die oben schon beschriebene Funktionsweise mit einer zwangsweisen Folgebetätigung der Ventilkörper erreicht. Damit bietet auch die zuletzt beschriebene Fütterungsvorrichtung den Vorteil, daß bei jedem Futterabruf nur eine bestimmte, begrenzte Futtermenge ausgegeben wird. Das Dosierrohr kann bei dieser Ausführung der Fütterungsvorrichtung ein einfacher starrer Rohrabschnitt sein. Die Kraft der Druckfederanordnung muß hier so bemessen werden, daß die Druckfederanordnung bei angehobener Betätigungsplatte den zweiten, unteren Dichtkörper in seiner Dichtstellung hält, wenn von oben her das Futter, insbesondere Flüssigbreifutter, in das Dosierrohr einströmt.

Im folgenden wird ein Ausführungsbeispiel der erfindungsgemäßen Fütterungsvorrichtung anhand einer Zeichnung erläutert. Die Figuren der Zeichnung zeigen:
- Figur 1: eine Fütterungsvorrichtung im Vertikalschnitt in schematisierter vereinfachter Darstellung
und
- Figur 2: eine Ausgabe- und Dosiereinrichtung als Teil der Fütterungsvorrichtung, ebenfalls im Vertikalschnitt, in einer vergrößerten Darstellung.

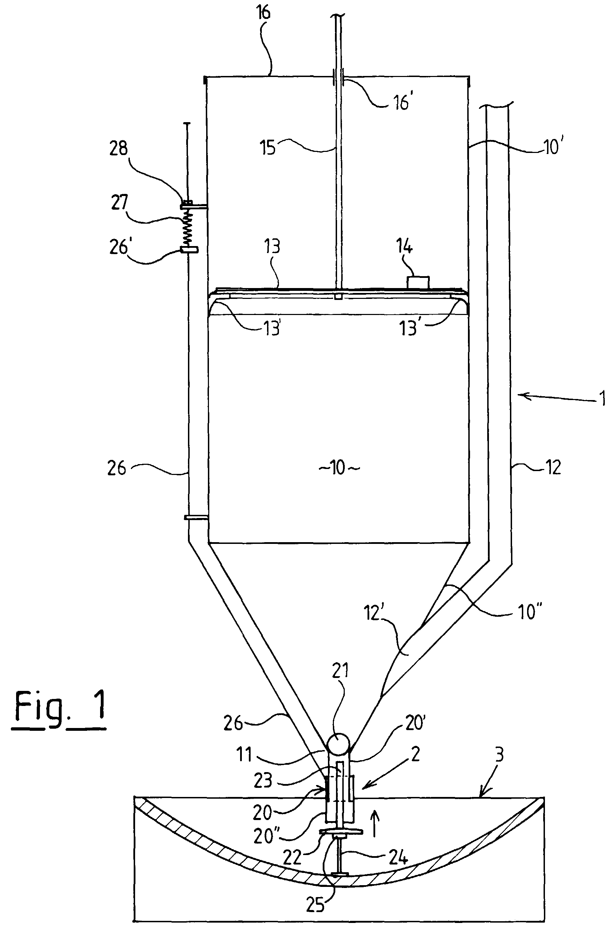

Wie die Figur 1 der Zeichnung zeigt, umfaßt das dargestellte Ausführungsbeispiel der Fütterungsvorrichtung 1 als wesentliche Teile einen Vorratsbehälter 10 für an zu fütternde Tiere auszugebendes Futter, hier Flüssigbreifutter, sowie einen darunter angeordneten Trog 3, in den aus dem Vorratsbehälter 10 über eine Ausgabe- und Dosiereinrichtung 2 Futter in vorgegebenen Portionen ausgebbar ist.

Der Vorratsbehälter 10 besitzt im dargestellten Ausführungsbeispiel einen zylindrischen oberen Teil 10' und einen trichterförmigen unteren Teil 10 ''. An seinem oberen Ende ist der Vorratsbehälter 10 mit einer Traverse 16 versehen.

Rechts vom Vorratsbehälter 10 ist in der Figur 1 ein Teil einer Futterzuführleitung 12 erkennbar, die in einer Einmündung 12' in den unteren Teil 10'' des Futterbehälters 10 einmündet. Durch diese Futterzuführleitung 12 ist von einer nicht dargestellten zentralen Futteraufbereitungseinrichtung frisch aufbereitetes Futter, hier Flüssigbreifutter, mittels einer Pumpe in den Vorratsbehälter 10 förderbar.

Innerhalb des oberen Teils 10' des Vorratsbehälters 10 befindet sich weiterhin ein Reinigungsschieber 13, der durch eine flache Platte gebildet ist, an der umlaufend eine nach unten weisende Dichtung 13' befestigt ist. Gegen Verkantung und Verklemmung ist der Reinigungsschieber 13 mit einer Führungsstange 15 versehen, die sich von der Oberseite des Reinigungsschiebers 13 nach oben und durch eine Führungsbuchse 16' in der Traverse 16 hindurch erstreckt. Zum Entlüften des Teils des Vorratsbehälters 10 unterhalb des Reinigungsschiebers 13 besitzt dieser ein Entlüftungsventil 14 an sich bekannter Bauart. Bei Befüllung des Vorratsbehälters 10 wird der Reinigungsschieber 13 durch das eingeförderte Futter nach oben bewegt. Die Bewegung des Reinigungsschiebers 13 nach unten kann manuell oder durch Schwerkraft oder auch durch einen Kraftantrieb, der hier nicht dargestellt ist, erfolgen. Dabei dient der Reinigungsschieber 13 zur Säuberung der inneren Oberfläche des Vorratsbehälters 10, wozu die nach unten weisende Dichtung 13' dient. Außerdem wird so ein übermäßiger Zutritt von Sauerstoff zum Futter innerhalb des Vorratsbehälters 10 vermieden, wodurch das Futter länger frisch bleibt.

Am unteren Ende des unteren Teils 10'' des Vorratsbehälters 10 besitzt dieser eine Futterauslaßöffnung 11, an die sich unmittelbar ein Dosierrohr 20 anschließt. In dem dargestellten Zustand der Fütterungsvorrichtung 1 ist die Futterauslaßöffnung 11, die zugleich das obere Ende des Dosierrohres 20 darstellt, durch einen ersten, oberen Ventilkörper 21 verschlossen. Der Ventilkörper 21 hat hier die Form einer Kugel und besteht aus einem Material mit einem spezifischen Gewicht, das größer ist als das des Futters im Vorratsbehälter 10.

Das Dosierrohr 20 besteht hier aus zwei Rohrabschnitten 20', 20'', die teleskopierend relativ zueinander verschiebbar sind. Der obere Rohrteil 20' besitzt einen etwas kleineren Durchmesser als der untere Rohrteil 20'', so daß der untere Rohrteil 20'' den oberen Rohrteil 20' außen umgibt und auf diesem in Vertikalrichtung verschiebbar geführt ist. Der obere Rohrabschnitt 20' ist fest mit dem unteren Ende des Vorratsbehälters 10 verbunden.

Unterhalb des unteren Endes des Dosierrohres 20 ist ein zweiter Ventilkörper 22, hier in Form einer nach oben gewölbten Platte, angeordnet. Der zweite Ventilkörper 22 ist mit einem Betätigungselement 23 in Form eines Rohrstückes verbunden, das von dem zweiten Ventilkörper 22 nach oben weist. Der zweite Ventilkörper 22 befindet sich im in Figur 1 dargestellten Zustand der Fütterungsvorrichtung in seiner Öffnungsstellung, in der gleichzeitig das obere Ende des Betätigungselements 23 Abstand von dem ersten Ventilkörper 21 aufweist. Der zweite Ventilkörper 22 und das mit diesem verbundene Betätigungselement 23 sind zusammen auf einer Vertikalführung 24 gehaltert, die ihrerseits mit dem Trog 3 verbunden ist und von diesem nach oben ragt.

An dem unteren Rohrabschnitt 20'' des Dosierrohres 20 ist eine Druckstange 26 angebracht, die parallel zum Vorratsbehälter 10 nach oben geführt ist und nahe dem oberen Ende des Vorratsbehälters 10 endet. Die Druckstange 26 ist nahe ihrem oberen Ende in einer Druckstangenführung 28, die außen am Vorratsbehälter 10 befestigt ist, geführt. Auf der Druckstange 26 ist im Abstand unterhalb der Druckstangenführung 28 ein verstellbarer und fixierbarer Anschlag 26' angebracht. Zwischen diesem Anschlag 26' und der Druckstangenführung 28 ist eine Druckfeder 27 angeordnet. Diese Druckfeder sorgt über die Druckstange 26 für eine Vorbelastungskraft, die den unteren Rohrabschnitt 20'' des Dosierrohres 20 nach unten hin vorbelastet. Der Bewegungsweg des unteren Rohrabschnittes 20'' relativ zum oberen Rohrabschnitt 20' kann durch einen ebenfalls auf der Druckstange angebrachten zweiten verstellbaren Anschlag 26'', der in Figur 1 oben auf der Druckstangenführung 28 aufliegt, auf ein gewünschtes Maß begrenzt werden.

Die beschriebene Fütterungsvorrichtung erlaubt den zu fütternden Tieren einen selbständigen Futterabruf, indem das Tier mit seiner Schnauze den zweiten, unteren Ventilkörper 22 nach oben bewegt. Zunächst gelangt dabei der Ventilkörper 22 in dichtende Anlage an das untere Ende des unteren Rohrabschnittes 20'' des Dosierrohres 20. Bei der weiteren Bewegung des zweiten Ventilkörpers 22 nach oben wird dann auch der untere Rohrabschnitt 20'' gegen die Kraft der Druckfeder 27 nach oben verschoben, wobei im zweiten Teil dieser Bewegung das Betätigungselement 23 im Inneren des Dosierrohres 20 mit seinem oberen Ende in Anlage an den ersten, oberen Ventilkörper 21 gelangt und diesen dann aus seiner Schließstellung in seine Öffnungsstellung bewegt. Daraufhin kann Futter aus dem Vorratsbehälter 10 in das Dosierrohr 20 einströmen, bis dieses vollständig gefüllt ist. Läßt nun das zu fütternde Tier den zweiten Ventilkörper 22 wieder los, bewegt sich dieser zunächst zusammen mit dem unteren Rohrabschnitt 20'' unter der Wirkung der Druckfeder 27 nach unten, bis der untere Rohrabschnitt 20'' das Ende seines Bewegungsweges erreicht hat. In diesem Moment hat der obere, erste Ventilkörper 21 wieder seine Schließstellung erreicht, während der zweite Ventilkörper 22 noch seine Schließstellung einnimmt. Hiervon ausgehend bewegt sich der zweite Ventilkörper 22 unter Schwerkraftwirkung weiter nach unten, wobei nun das untere Ende des Dosierrohres 20 freigegeben wird und das Futter aus dem Dosierrohr 20 in den Trog 3 fällt. Die in den Trog 3 geförderte Futtermenge entspricht dabei dem Volumen des Dosierrohres, so daß stets eine bestimmte, begrenzte Futtermenge bei einem Futterabruf durch das zu fütternde Tier ausgegeben wird. Die Herstellung eines durchgängigen Auslaufweges für Futter aus dem Inneren des Vorratsbehälters 10 bis in den Trog 3 ist bei dieser Fütterungsvorrichtung 1 ausgeschlossen. Dadurch wird ein übermäßiges Befüllen des Troges 3 und damit die Gefahr eines Verderbens des Futters vermieden.

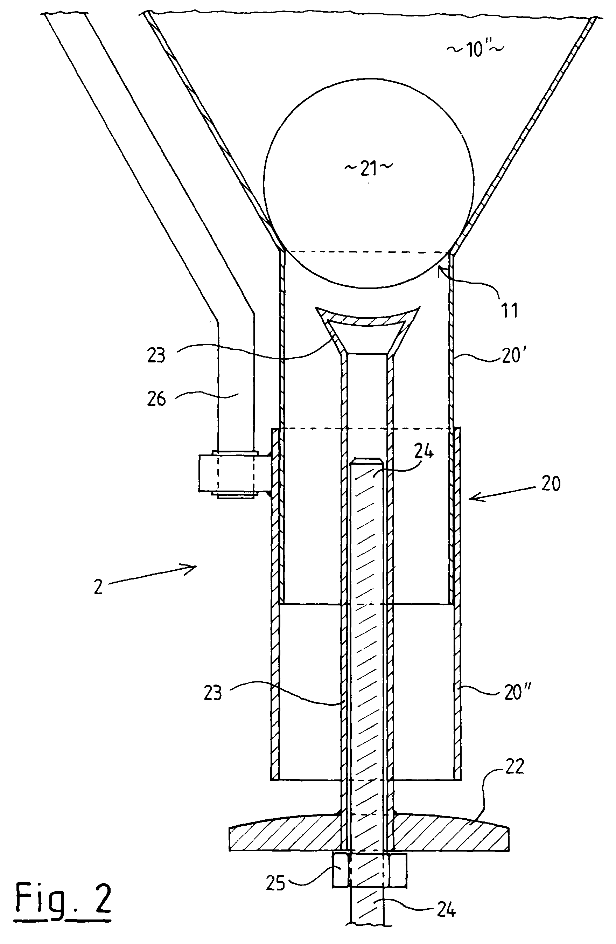

Figur 2 der Zeichnung zeigt in vergrößerter Darstellung die Ausgabe- und Dosiereinrichtung 2 als Teil der Fütterungsvorrichtung 1 gemäß Figur 1.

Im oberen Teil von Figur 2 ist gerade noch der untere Teil 10'' des Vorratsbehälters 10 erkennbar, dessen Futterauslaßöffnung 11 durch den ersten Ventilkörper 21 verschlossen wird. Nach unten schließt sich an die Futterauslaßöffnung 11 das Dosierrohr 20 an, dessen oberer Rohrteil 20' mit dem unteren, trichterförmigen Teil 10'' des Vorratsbehälters 10 fest verbunden oder einstückig ausgeführt ist.

Außen auf dem oberen Rohrabschnitt 20' ist der untere Rohrabschnitt 20'' des Dosierrohres 20 teleskopartig verschiebbar geführt. In Figur 2 links oben an dem unteren Rohrabschnitt 20'' des Dosierrohres 20 ist die Druckstange 26 angebracht und verläuft von dort parallel zum Vorratsbehälter 10 nach oben.

Unterhalb des unteren Endes des Dosierrohres 20 ist der zweite, untere Ventilkörper 22, der als nach oben gewölbter Teller ausgebildet ist, erkennbar. Der untere Ventilkörper 22 ist starr mit dem rohrförmigen Betätigungselement 23 verbunden, hier verschweißt. Das rohrförmige Betätigungselement 23 erstreckt sich durch das Dosierrohr 20 hindurch nach oben.

Der zweite, untere Ventilkörper 22 und das Betätigungselement 23 sind als Baueinheit auf der Vertikalführung 24, die hier als Gewindestange ausgebildet ist, in Vertikalrichtung verschieblich geführt. Durch eine Mutter ist ein unterer Anschlag 25 auf der Vertikalführung 24 gebildet, wobei durch Verdrehen dieser Mutter die Lage des Anschlages 25 relativ zur Vertikalführung 24 veränderbar ist.

Das obere Ende des Betätigungselementes 23 ist zur Anpassung an die Oberflächenform des als Kugel ausgeführten ersten Ventilkörpers 21 mit einer konkaven Rundung ausgeführt, so daß stets eine sichere und zentrierte Anlage des Betätigungselementes 23 an dem ersten Ventilkörper 21 bei dessen Anheben durch das Betätigungselement 23 gewährleistet ist. Die wirksame Länge des Betätigungselementes 23 ist dabei so zu wählen, daß sie maximal der Länge des Dosierrohres 20 entspricht. Auf diese Weise wird sichergestellt, daß die Überführung des ersten Ventilkörpers 21 in dessen Öffnungsstellung erst dann erfolgt, wenn der zweite, untere Ventilkörper 22 seine Dichtstellung am unteren Ende des Dosierrohres 20 bereits erreicht hat.

## Patentansprüche

1. Fütterungsvorrichtung (1) für Tiere, insbesondere Schweine, mit einem Vorratsbehälter (10) für Futter, insbesondere fließfähiges Flüssigbreifutter oder schüttfähiges Trockenfutter, mit einer Ausgabe- und Dosiereinrichtung (2) und mit einem Futtertrog (3), wobei der Vorratsbehälter (10) zumindest in seinem unteren Teil (10'') trichterförmig mit einer durch einen ersten Ventilkörper (21) verschließbaren und freigebbaren Futterauslaßöffnung (11) ausgeführt ist, wobei von der Futterauslaßöffnung (11) ein Dosierrohr (20) nach unten läuft, dessen unteres Ende durch einen zweiten, von einem zu fütternden Tier verstellbaren Ventilkörper (22) verschließbar und freigebbar ist, und wobei die beiden Ventilkörper (21, 22) derart miteinander gekoppelt sind, daß bei einer Schließbewegung des zweiten Ventilkörpers (22) der erste Ventilkörper (21) eine Öffnungsbewegung ausführt und bei einer Schließbewegung des ersten Ventilkörpers (21) der zweite Ventilkörper (22) eine Öffnungsbewegung ausführt,
**dadurch gekennzeichnet,**
daß die Kopplung zwischen den beiden Ventilkörpern (21, 22) derart ausgeführt ist, daß bei der Schließbewegung des zweiten Ventilkörpers (22) der erste Ventilkörper (21) seine Öffnungsbewegung erst beginnt, nachdem der zweite Ventilkörper (22) seine Schließstellung erreicht hat, und daß bei der Schließbewegung des ersten Ventilkörpers (21) der zweite Ventilkörper (22) seine Öffnungsbewegung erst beginnt, nachdem der erste Ventilkörper (21) seine Schließstellung erreicht hat.

2. Fütterungsvorrichtung nach Anspruch 1, dadurch gekennzeichnet, daß das Dosierrohr (20) aus mindestens zwei teleskopisch gegeneinander begrenzt ein- und ausschiebbaren Rohrabschnitten (20', 20'') gebildet ist, die durch eine vorgegebene oder vorgebbare Kraft in Ausschubrichtung vorbelastet sind, und daß zwischen den beiden Ventilkörpern (21, 22) ein nur mit einem der Ventilkörper (21, 22) verbundenes, durch das Dosierrohr (20) verlaufendes Betätigungselement (23) vorgesehen ist, dessen wirksame Länge maximal der Länge des Dosierrohres (20) bei ausgeschobenen Rohrabschnitten (20', 20'') entspricht.

3. Fütterungsvorrichtung nach Anspruch 2, dadurch gekennzeichnet, daß der zweite Ventilkörper (22) und das Betätigungselement (23) starr miteinander verbunden und auf einer Vertikalführung (24) gelagert sind.

4. Fütterungsvorrichtung nach Anspruch 3, dadurch gekennzeichnet, daß die Vertikalführung (24) durch eine im Futtertrog (3) fixierte Stange mit einem höhenverstellbaren Anschlag (25) gebildet ist und daß das Betätigungselement (23) rohrförmig ausgebildet und zusammen mit dem zweiten Ventilkörper (22) auf den oberen Teil der Stange aufgesetzt ist.

5. Fütterungsvorrichtung nach einem der vorhergehenden Ansprüche, dadurch gekennzeichnet, daß der erste Ventilkörper (21) eine Kugel ist, deren spezifisches Gewicht größer ist als das des Futters.

6. Fütterungsvorrichtung nach einem der vorhergehenden Ansprüche, dadurch gekennzeichnet, daß der zweite Ventilkörper (22) eine nach oben gewölbte oder flache Platte ist.

7. Fütterungsvorrichtung nach einem der Ansprüche 2 bis 6, dadurch gekennzeichnet, daß der obere Rohrabschnitt (20') fest mit dem Futterbehälter (10) verbunden ist, daß der untere Rohrabschnitt (20'') den oberen Rohrabschnitt (20') außen umgibt und daß zwischen dem unteren Rohrabschnitt (20'') und dem Futterbehälter (10) eine einstellbare Druckfederanordnung (27) vorgesehen ist.

8. Fütterungsvorrichtung nach Anspruch 7, dadurch gekennzeichnet, daß von dem unteren Rohrabschnitt (20'') eine Druckstange (26) parallel zum Vorratsbehälter (10) bis nahe an dessen oberes Ende geführt ist, daß am oberen Ende der Druckstange (26) die Druckfederanordnung (27) angebracht ist und daß an der Druckstange (26) ein von der Druckfederanordnung (27) beaufschlagter, verschieb- und fixierbarer Anschlag (26') vorgesehen ist.

9. Fütterungsvorrichtung nach einem der vorhergehenden Ansprüche, dadurch gekennzeichnet, daß der Vorratsbehälter (10) in seinem oberen, größten Teil (10') mit einer gleichbleibenden Querschnittsfläche ausgeführt ist und daß in diesem Teil (10') des Vorratsbehälters (10) ein Reinigungsschieber (13) mit einer umlaufenden, nach unten weisenden Dichtung (13') angeordnet ist.

10. Fütterungsvorrichtung nach Anspruch 9, dadurch gekennzeichnet, daß der Reinigungsschieber (13) mindestens eine von seiner Oberseite nach oben weisende Führungsstange (15) aufweist, die durch eine Führungsbuchse (16') in einer oben auf dem Vorratsbehälter (10) angeordneten Traverse (16) geführt ist.

11. Fütterungsvorrichtung nach einem der vorhergehenden Ansprüche, gekennzeichnet durch eine Futterzuführleitung (12), die von einer zentralen Futterzubereitungs- oder Futtervorhaltungs-Vorrichtung kommend in den unteren Teil (10'') des Vorratsbehälters (10) einmündet.

12. Fütterungsvorrichtung nach Anspruch 1, dadurch gekennzeichnet, daß unter dem zweiten Ventilkörper (22) im Abstand und verschiebbar zu diesem eine Betätigungsplatte angeordnet ist, daß zwischen dem zweiten Ventilkörper (22) und der Betätigungsplatte eine Druckfederanordnung vorgesehen ist und daß zwischen den beiden Ventilkörpern (21, 22) ein nur mit einem der Ventilkörper (21; 22) verbundenes, durch das Dosierrohr (20) verlaufendes Betätigungselement (23) vorgesehen ist, dessen wirksame Länge maximal der Länge des Dosierrohres (20) entspricht.
